# EUROPÄISCHE PATENTSCHRIFT

(11) **EP 1 058 778 B1**
(45) Veröffentlichungstag und Bekanntmachung des Hinweises auf die Patenterteilung: **05.06.2002**
(21) Anmeldenummer: 99917752.0
(22) Anmeldetag: 23.02.1999
(51) Int. Cl.: F01N 3/08, F02M 25/07, B01D 53/04, B01D 53/94, B01J 19/08

(54) **VERFAHREN UND VORRICHTUNG ZUR ABGASREINIGUNG**
METHOD AND DEVICE FOR CLEANING EXHAUST GASES
PROCEDE ET DISPOSITIF POUR L'EPURATION DES GAZ D'ECHAPPEMENT

(30) Priorität: 26.02.1998 DE 19808098
(43) Veröffentlichungstag der Anmeldung: 13.12.2000
(73) Patentinhaber: SIEMENS AKTIENGESELLSCHAFT, 80333 München (DE); DaimlerChrysler AG, 70546 Stuttgart (DE)
(72) Erfinder: HAMMER, Thomas, D-91334 Hemhofen (DE); KRUTZSCH, Bernd, D-73770 Denkendorf (DE); WENNINGER, Günter, D-70599 Stuttgart (DE); HAAK, Karl-Ernst, D-73669 Lichtenwalde (DE); BOEGNER, Walter, D-71686 Remseck (DE)
(74) Vertreter: Berg, Peter
(86) Internationale Anmeldenummer: DE9900488
(87) Internationale Veröffentlichungsnummer: WO9943933

(56) Entgegenhaltungen:
- WO-A-97/03746
- DE-C- 4 319 294
- US-A- 5 711 147

## Beschreibung

Die Erfindung betrifft ein Verfahren zur Abgasreinigung durch chemische Zersetzung von Schadstoffen eines Schadstoffgemisches, insbesondere zur Reduzierung des Stickoxidgehalts, im bei einem Verbrennungsprozeß erzeugten Abgas. Sie betrifft weiter eine nach diesem Verfahren arbeitende Vorrichtung. Das Verfahren und die Vorrichtung sind dabei in erster Linie zur Abgasreinigung bei einem Verbrennungsmotor, insbesondere einem Diesel- oder Otto-Magermotor, vorgesehen.

Abgase aus Verbrennungsprozessen stellen einen der Hauptemittenten von Luftschadstoffen dar, z. B. von Stickoxiden, Schwefeldioxid, Kohlenwasserstoffen, Kohlenmonoxid und Ruß. Im Gegensatz zum Ottomotor läuft in einem Dieselmotor oder einem Otto-Magermotor der Verbrennungsprozeß unter Luftüberschuß ab. In diesem Fall ist mehr Luftsauerstoff im Verbrennungsgemisch enthalten, als während der Verbrennung chemisch umgesetzt wird. Für mit Luftüberschuß arbeitende Verbrennungsmotoren ist der sogenannte Drei-Wege-Katalysator nur teilweise geeignet, da lediglich die Kohlenwasserstoffe und Kohlenmonoxid weitgehend abgebaut werden. Infolge des hohen Sauerstoffgehalts im Abgas können mittels eines solchen Katalysators die Stickoxide jedoch nicht vermindert werden.

Aus der DE 196 00 558 A1 ist ein Verfahren zur Reduzierung des Stickoxidgehalts durch Einsatz eines Katalysators bekannt. Um die gewünschte selektive chemische Reduktion der Stickoxide zu erreichen, ist dort jedoch der Einsatz eines Reduktionsmittels, wie z.B. Harnstoff, erforderlich.

Aus der EP 0 366 876 A1 ist darüber hinaus eine Vorrichtung zur Stickoxid-Verminderung in einem Abgas unter Verwendung eines Plasmaverfahrens bekannt, bei dem im Plasma erzeugte Radikale die Reduktion der Stickoxide herbeiführen. Das bekannte Plasmaverfahren erfordert allerdings bei der technischen Umsetzung ebenfalls den Zusatz eines Reduktionsmittels. Der erforderliche Zusatz des Reduktionsmittels verkompliziert jedoch in nachteiliger Weise die Handhabung des Verfahrens, zumal der Einsatz in einem mobilen Verbrennungsmotor ein Mitführen des Reduktionsmittels bedingt. Wird alternativ der Kraftstoff selbst als Reduktionsmittel verwendet, so muß dieser hoch dosiert werden, womit ein Kraftstoffmehrverbrauch entsteht.

Ein reduktionsmittelfrei arbeitendes Verfahren ist aus der DE 43 19 294 C1 bekannt. Bei diesem sogenannten SNR-Verfahren (Selektive NOₓ-Rückführung) werden Stickoxide (NOₓ) in einem ersten Verfahrensschritt durch selektive Adsorption aus dem Abgas entfernt. In einem zweiten Verfahrensschritt werden die adsorbierten Stickoxide desorbiert und in den Verbrennungsprozeß zurückgeführt. Da die Stickoxide thermodynamisch instabil sind, können sie unter den im Verbrennungsraum herrschenden Reaktionsbedingungen zu Stickstoff (N₂) und Sauerstoff (O₂) reagieren. Dabei sind weiterhin auch chemische Reaktionen mit Kohlenstoff (C), Kohlenmonoxid (CO) oder Kohlenwasserstoffen möglich, was in synergetischer Weise zu einem Abbau organischer Schadstoffe führt.

Das bekannte Verfahren wird mit zwei parallel geschalteten Adsorbern durchgeführt, von denen nur ein erster Adsorber dem Abgasstrom zugeschaltet ist, während der zweite Absorber im Desorptionsbetrieb arbeitet. Sobald im ersten Adsorber ein Sättigungswert erreicht ist, erfolgt eine Umschaltung vom ersten auf den zweiten Adsorber. Das SNR-Verfahren führt jedoch mit den bekannten NOₓ-Absorbermaterialien erst ab einer Ansprechtemperatur von ca. 200° C zu einer effizienten Verringerung von Stickstoffmonoxid (NO), da nur oberhalb dieser Temperatur eine wirksame Adsorption von NO stattfindet.

Durch Einsatz eines Oxidationskatalysators in Verbindung mit dem SNR-Verfahren kann die Ansprechtemperatur erniedrigt oder die Speicherfähigkeit bei gegebener Temperatur erhöht werden. Ursache für dieses Verhalten ist, daß insbesondere bei vergleichsweise niedrigen Temperaturen an Perovskiten und anderen beim SNR-Verfahren verwendeten Adsorber-Materialien Stickstoffdioxid (NO₂) leichter adsorbiert wird als NO. Zudem besteht die Wirkung eines Oxidations-Katalysators u.a. darin, daß er die Oxidation von NO zu NO₂ fördert. Allerdings weist auch ein derartiger Oxidations-Katalysator eine Ansprechtemperatur von ungefähr 170° C auf. Somit ist auch weiterhin mit dem SNR-Verfahren im Temperaturbereich von 100°C bis 170°C keine wirksame NOₓ-Verringerung möglich.

Für die Erfüllung der EURO 4-Norm für Personenkraftwagen im Jahre 2005 ist allerdings eine wirksame NOₓ-Verringerung bei Temperaturen auch unterhalb von 170° C erforderlich. Insbesondere beim Kaltstart und bei Stadtfahrten sind Abgastemperaturen unter 200°C dominierend. Andererseits führen zu hohe Temperaturen, insb. oberhalb ca. 450°C, wie sie bei Dauerbetrieb in der Nähe des Motors vorherrschen, zur Desorption. Aus diesem Grund ist eine Verbesserung des SNR-Verfahrens nicht auf einfache Weise durch beliebig nahe Positionierung am Motor zu erzielen.

Weiterhin wird in der WO 97/03746 A1 ein Verfahren und eine zugehörige Vorrichtung zur plasmachemischen Zersetzung und/oder Vernichtung von Schadstoffen beschrieben, bei denen das schadstoffhaltige Abgas eine mit dielektrisch behinderten Entladungen beaufschlagte Strecke in einem Reaktorvolumen durchlaufen, wobei speziell die Entladung in einer räumlich periodischen Struktur betrieben wird, bei der das Reaktorvolumen in axialer Richtung in Entladungszonen einerseits und entladungsfreie Zonen andererseits unterteilt ist. Bei einer diesbezüglichen Vorrichtung sind Mittel zur Erzeugung von in axialer Richtung vorzugsweise periodischen lokalen Feldüberhöhungen vorhanden. Schließlich ist aus der US 5 711 147 A1 eine Methode bekannt, bei der eine Behandlung eines Abgases durch ein nicht-thermisches Plasma mit der katalytischen Reduktion von NOₓ kombiniert wird.

Ausgehend von obigem Stand der Technik liegt der Erfindung die Aufgabe zugrunde, ein Verfahren zur chemischen Zersetzung von Schadstoffen eines Schadstoffgemisches, insbesondere zur Reduzierung des Stickoxidgehalts, im bei einem Verbrennungsprozeß erzeugten Abgas anzugeben, das auch bei einer niedrigen Betriebstemperatur effizient arbeitet. Desweiteren soll eine zur Durchführung des Verfahrens besonders geeignete Vorrichtung angegeben werden.

Bezüglich des Verfahrens der eingangs genannten Art wird diese Aufgabe erfindungsgemäß gelöst durch die Merkmale des Patentanspruchs 1. Weiterbildungen sind in den abhängigen Verfahrensansprüchen angegeben.

Wesentlich ist bei der Erfindung, dass lediglich bei Abgastemperaturen unterhalb von 250°C in einem ersten Verfahrensschritt im Abgas ein Plasma erzeugt wird, so daß im Abgas enthaltene Moleküle durch Ionisation zu chemisch aktiven Radikalen umgewandelt werden. Diese führen durch chemische Reaktion mit Schadstoffmolekülen zu einer veränderten Zusammensetzung des plasmachemisch vorbehandelten Schadstoffgemisches. Die Reaktionsbedingungen im Plasma werden dabei derart eingestellt, daß vorrangig schwer adsorbierbare Schadstoffe in leicht adsorbierbare Schadstoffe umgesetzt werden. Aus dem vorbehandelten Schadstoffgemisch werden in den folgenden Verfahrensschritten nach Art des SNR-Verfahrens Schadstoffe einer Schadstoffgruppe selektiv adsorbiert und nach deren Desorption an den Verbrennungsprozeß zurückgeführt.

Infolge des erhöhten Anteils an leicht adsorbierbaren Schadstoffen im vorbehandelten Schadstoffgemisch wird die Ansprechtemperatur deutlich erniedrigt. Mit anderen Worten: Aufgrund der plasmachemischen Vorbehandlung wird die Effizienz der Schadstoffadsorption bei niedrigen Temperaturen deutlich erhöht. Ein wesentlicher Vorteil des Verfahrens besteht somit darin, daß weder der Zusatz eines Reduktions- oder Oxidationsmittels noch die Bereitstellung einer katalytischen Oberfläche erforderlich ist.

Das Plasma wird bevorzugt mittels elektrischer Gasentladung, insbesondere in Form dielektrisch behinderter Entladung, erzeugt. Eine Plasmaerzeugung ist auf diesem Weg einfach zu realisieren. Das Abgas wird dabei nur wenig erhitzt (nicht-thermisches Plasma) und ist in seinen Parametern leicht zu verändern. Zweckmäßigerweise werden die Plasmaparameter derart eingestellt, daß durch die erzeugten Radikale vorrangig Schadstoffe des Schadstoffgemisches oxidiert werden. Besonders vorteilhaft ist dabei die Oxidation von NO zu NO₂ durch O- und OH-Radikale.

Die wichtigsten Plasmaparameter sind die elektrische Feldstärke im Abgas, die bevorzugt 100 bis 500 Td (Townsend; 1 Td = 10⁻²¹Vm²) betragen sollte, und die Abgastemperatur in der Gasentladung. Diese sollte eine Temperatur von 250°C nicht überschreiten, so daß das Abgas nur unwesentlich aufgeheizt wird. Oberhalb dieser Temperatur erfolgt eine verstärkte Rückbildung von NO₂ zu NO, die zu einer Ineffizienz der plasmachemischen Vorbehandlung führen würde. Im Gegensatz zur energieaufwendigen Reduktion von NO und NO₂ in N₂ und O₂, wozu das Plasmaverfahren üblicherweise eingesetzt werden soll, ist die plasmainduzierte Oxidation von NO zu NO₂ unterhalb von 250°C sehr effizient. Obwohl diese Reaktion im Sinne der Abgasreinigung für sich gesehen ungünstig ist, weist sie für das vorgestellte Verfahren den entscheidenden Vorteil auf, daß NO₂ leicht adsorbierbar ist.

Um die Effizienz des Verfahrens bei allen Betriebsbedingungen zu erhöhen, wird zweckmäßigerweise der Stoffumsatz bei der plasmachemischen Vorbehandlung über die zur Erzeugung des Plasmas aufgewendete Leistung eingestellt. Für eine entsprechende Regelung wesentliche Informationen sind zusätzlich zur Abgastemperatur, die an einem oder mehreren Punkten entlang des Abgasstroms bestimmt werden kann, die NO-Konzentration und der Abgas-Volumenstrom. Diese Größen können direkt gemessen oder aus für die Verbrennung relevanten Parametern, beispielsweise der Verbrennungstemperatur, der Menge und/oder der Zusammensetzung des zugeführten Verbrennungsgemisches, ermittelt werden.

Die zur Erzeugung des Plasmas aufgewendete Leistung ist über die zur Auslösung der Gasentladung angelegte Entladungsspannung einstellbar. Als Entladungsspannung wird vorteilhafterweise eine zeitlich periodische, d.h. sinusförmige oder gepulste, Hochspannung verwendet, die in Abstimmung mit der Geometrie einer entsprechenden Vorrichtung vorzugsweise im Frequenzbereich von 1 kHz bis 100 kHz mit einer Amplitude von 5 kV und 20 kV gewählt wird. In diesen Grenzen wird bei vertretbarem Energieaufwand ein effizienter Stoffumsatz während der plasmachemischen Vorbehandlung erzielt.

Versuche haben gezeigt, daß als Regelgröße sowohl die Frequenz als auch die Amplitude der Entladungsspannung herangezogen werden kann. Der Einfachheit halber wird bevorzugt nur eine der beiden Größen variiert, während die andere konstant gehalten wird.

Wesentliche Kriterien zur Regelung der Entladungsspannung und damit letztlich des Stoffumsatzes bei der plasmachemischen Vorbehandlung sind gemäß einer bevorzugten Ausführung, daß gerade soviel NO zu NO₂ umgesetzt wird, wie für eine ausreichende NO-Minderung durch das SNR-Verfahren bei einer bestimmten Temperatur erforderlich ist. Des weiteren wird das Abgas durch die Gasentladung nicht wesentlich aufgeheizt. Dabei ist als wesentliche Gasaufheizung in diesem Zusammenhang jede durch das Plasma verursachte Gasaufheizung definiert, die zum Überschreiten einer Temperatur von ca. 250°C in der gesamten für Radikal-Reaktionen ausschlaggebenden Zeitspanne führt.

Durch die beschriebene Regelung läßt sich das Verfahren besonders gut an die verschiedenen auftretenden Abgastemperaturen anpassen. Dies gilt insbesondere für hohe Abgastemperaturen ≥ 250°C, bei der die plasmachemische Vorbehandlung energiesparenderweise entfällt, da einerseits die Abgastemperatur für eine effiziente plasmachemische Vorbehandlung zu hoch ist, und andererseits dann das SNR-Verfahren auch ohne Vorbehandlung effektiv arbeitet.

Bezüglich der Vorrichtung wird die genannte Aufgabe erfindungsgemäß gelöst durch die Merkmale des Patentanspruchs 9. Weiterbildungen der Vorrichtung sind in den abhängigen Sachansprüchen angegeben.

Bei der erfindungsgemäßen Vorrichtung ist entlang eines aus einem Verbrennungsraum abströmenden Abgasstroms zunächst ein Reaktor zur Erzeugung eines Plasmas im Abgas und zur Vorbehandlung eines im Abgas enthaltenen Schadstoffgemisches unter Einwirkung des Plasmas vorgesehen. Dem Reaktor nachgeschaltet ist ein für eine Schadstoffgruppe, insbesondere für Stickoxide, selektiver Adsorber. Weiterhin umfaßt die Vorrichtung Mittel zur Desorption von im Adsorber gespeicherten Schadstoffen und für eine Rückführung dieser Schadstoffe an den Verbrennungsraum.

Um eine für die Adsorption ungünstige Abkühlung des Abgases zwischen dem Reaktor und dem Adsorber wirkungsvoll zu verhindern, wird der Adsorber vorzugsweise in räumlicher Nähe des Reaktors positioniert. Alternativ oder zusätzlich kann zu dem gleichen Zweck eine thermisch isolierte Abgasleitung zwischen dem Reaktor und dem Adsorber vorgesehen sein.

Der Reaktor umfaßt zweckmäßigerweise eine mit einer dielektrischen Schicht versehenen Elektrode und eine dieser mit Abstand gegenüberliegende Gegenelektrode. Dadurch läßt sich in dem zwischen den beiden Elektroden liegenden Entladungsspalt eine für die plasmachemische Vorbehandlung besonders günstige sogenannte dielektrisch behinderte Entladung - auch Stille Entladung oder Barrierenentladung genannt - erzeugen. Ein derartiger Reaktor ist an sich z.B. aus der WO 97/03746 bekannt. Eine besonders hohe Durchschlagfestigkeit wird bei Verwendung einer Aluminiumoxidkeramik für die dielektrische Schicht erzielt.

Die Elektroden sind vorteilhafterweise koaxial zueinander ausgerichtet, da dann infolge der hohen Symmetrie auf einfache Weise homogene Plasmabedingungen herstellbar sind. Von besonderem Vorteil ist eine Strukturierung der Gegenelektrode, die bevorzugt in Form senkrecht in den Entladungsspalt hineinragender Vorsprünge ausgebildet ist. Dadurch wird der Reaktor längs der Strömungsrichtung in Zonen mit hohem elektrischen Feld zur Radikalerzeugung und in Zonen mit niedrigem elektrischen Feld zur ungestörten Reaktion der Radikale mit dem Schadstoffgemisch unterteilt. Bei einer Entladungsspannung der vorgenannten Stärke kann durch Strukturierung der Elektroden die Breite des Entladungsspaltes von maximal 2mm bei unstrukturierten Elektroden auf ca. 6mm bis 8mm erhöht werden. Dadurch läßt sich die Durchflußrate des Reaktors entscheidend erhöhen.

Mittels einer Regeleinheit, die Informationen über die Abgastemperatur und/oder über mindestens einen die Verbrennung bestimmenden Parameter berücksichtigt, kann die Vorrichtung präzise an die verschiedenen Betriebsbedingungen angepaßt werden. Dazu gibt die Regeleinheit die von einem Hochspannungsgenerator erzeugte und von diesem an die Elektroden angelegte Entladungsspannung vor.

Durch Verwendung von zwei parallelgeschalteten Adsorbern wird ein kontinuierlich effizienter Betrieb der Vorrichtung ermöglicht, zumal bei Sättigung eines dem Abgasstrom zugeschalteten Adsorbers auf den zweiten Adsorber umgeschaltet werden kann. Die Desorption und Rückführung der Schadstoffe erfolgt dabei ungestört jeweils aus dem vom Abgasstrom abgesperrten Adsorber. Besonders einfach lassen sich die adsorbierten Schadstoffe mittels in diesen Adsorber eingeblasener Heißluft desorbieren.

Die mit der Erfindung erzielten Vorteile bestehen insbesondere darin, daß sich durch die geeignete Kombination eines Plasmaverfahrens mit dem SNR-Verfahren der Schadstoffgehalt im Abgas eines Diesel- oder eines Otto-Mager-Motors auch bei einer Abgastemperatur zwischen 100°C und 170°C wirksam reduzieren läßt. Dabei ist keine Zugabe eines Reduktionsmittels erforderlich. Die Erfindung nutzt dabei einen bei dem bekannten Plasmaverfahren höchst unerwünschten Effekt, nämlich die Oxidation von NO zu NO₂, um das bekannte SNR-Verfahren entscheidend zu verbessern.

Nachfolgend werden Ausführungsbeispiele der Erfindung anhand einer Zeichnung näher erläutert. Dabei zeigen:
- FIG 1: eine Vorrichtung zur Schadstoffzersetzung mit einem Reaktor und mit zwei Adsorbern,
- FIG 2: eine Variante des Reaktors gemäß FIG 1 im Querschnitt,
- FIG 3: den Reaktor gemäß FIG 2 im Längsschnitt III-III,
- FIG 4: im Querschnitt eine alternative Variante des Reaktors mit einer strukturierten Gegenelektrode, und
- FIG 5: den Reaktor gemäß FIG 4 im Längsschnitt V-V.

Einander entsprechende Teile sind in allen Figuren mit den gleichen Bezugszeichen versehen.

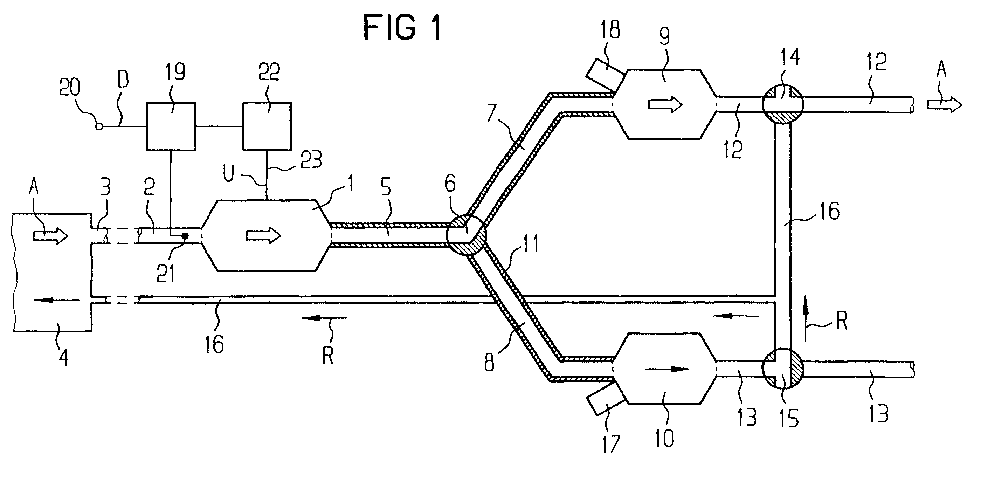

Die in FIG 1 dargestellte Vorrichtung zur Abgasreinigung umfaßt einen Reaktor 1 zur Erzeugung eines nicht-thermischen Plasmas. Der Reaktor 1 ist über eine Abgasleitung 2 mit dem Abgasauslaß 3 eines Verbrennungsraumes 4 verbunden. Er dient zur Vorbehandlung des zusammen mit dem Abgas A aus dem Verbrennungsraum 4 abströmenden Schadstoffgemisches. Zur Weiterleitung des Abgases A und des darin enthaltenen, vorbehandelten Schadstoffgemisches ist an den Reaktor 1 ausgangsseitig eine Abgasleitung 5 angeschlossen. Über ein Schaltventil 6 ist alternativ eine von zwei abzweigenden Abgasleitungen 7 und 8 der Abgasleitung 5 zuschaltbar. Über die Abgasleitung 7 oder 8 wird das Abgas A abwechselnd einem von zwei für Stickoxide selektiven Adsorbern 9 bzw. 10 zugeleitet. Um einen kontinuierlichen Betrieb zu gewährleisten, sind die Adsorber 9 und 10 - ebenso wie die Abgasleitungen 7 und 8 - baugleich ausgeführt und symmetrisch zueinander angeordnet. Die Abgasleitungen 5,7 und 8 sind mit einer Wärmeisolierung 11 versehen, um ein Abkühlen des Abgases A zwischen dem Reaktor 1 und dem Adsorber 9 oder 10 zu verhindern. Das Schaltventil 6 ist bei Verwendung von zwei Adsorbern 9,10 zweckmäßigerweise als Drei-Wege-Ventil ausgebildet.

Ausgangsseitig ist an den Adsorbern 9,10 je eine Abgasleitung 12 bzw. 13 angeschlossen, in deren Verlauf jeweils ein Schaltventil 14,15 in Form eines Drei-Wege-Ventils angeordnet ist. In der dargestellten Stellung der Schaltventile 14,15 ist die Abgasleitung 12 für die Weiterleitung des Abgases A in Richtung eines nicht dargestellten Auspuffs freigeschaltet. Die Abgasleitung 13 ist in dieser Stellung zu einer in den Schaltventilen 14 und 15 abzweigende gemeinsame Rückführung 16 hin offen, die ihrerseits in den Verbrennungsraum 4 mündet.

In der dargestellten Stellung der Schaltventile 6,14,15 arbeitet der Adsorber 9 im Adsorptionsbetrieb und das Abgas A strömt über die Abgasleitungen 2,5,7 und 12. Gleichzeitig arbeitet der Adsorber 10 im Desorptionsbetrieb. Dazu wird der Adsorber 10 mittels eines Heißlufterzeugers 17 auf eine Temperatur ≥ 450° C erhitzt. Ein Rückstrom R aus mit desorbiertem NOₓ angereicherter Heißluft wird über die Rückführung 16 an den Verbrennungsraum 4 zurückgeleitet. Das desorbierte und in den Verbrennungsraum 4 zurückgeleitete NOₓ zersetzt sich bei den dort herrschenden Temperaturen in N₂ und O₂. Darüberhinaus führen Reaktionen von NOₓ mit weiteren Schadstoffen, wie z. B. C, CO und Kohlenwasserstoffen, zu einer gleichzeitigen Zersetzung dieser weiteren Schadstoffe.

Bei Sättigung des Adsorbers 9 werden die Schaltventile 6,14 und 15 in ihre alternative Stellung gebracht. Gleichzeitig wird vom Heißlufterzeuger 17 auf einen Heißlufterzeuger 18 umgeschaltet, der den Adsorber 9 erhitzt. Damit sind die Adsorber 9 und 10 hinsichtlich ihres Betriebszustands gegenüber FIG 1 vertauscht.

Zur Regelung der Plasmaerzeugung im Reaktor 1 ist eine Regeleinheit 19 vorgesehen. Die Regeleinheit 19 weist eine Schnittstelle 20 zur Einkopplung von für die Verbrennung relevanten Kenndaten D auf. Diese Kenndaten D werden z.B. von einer nicht dargestellten Motorsteuerung übermittelt. Des weiteren ist die Regeleinheit 19 mit einem in der Abgasleitung 2 positionierten Temperaturfühler 21 verbunden. Anhand der von diesem gemessenen Abgastemperatur und der als weitere Regelparameter bezogenen Kenndaten D stellt die Regeleinheit 19 eine von einem Hochspannungsgenerator 22 erzeugte Entladungsspannung U ein. Diese wird über eine Hochspannungsleitung 23 in den Reaktor 1 eingespeist.

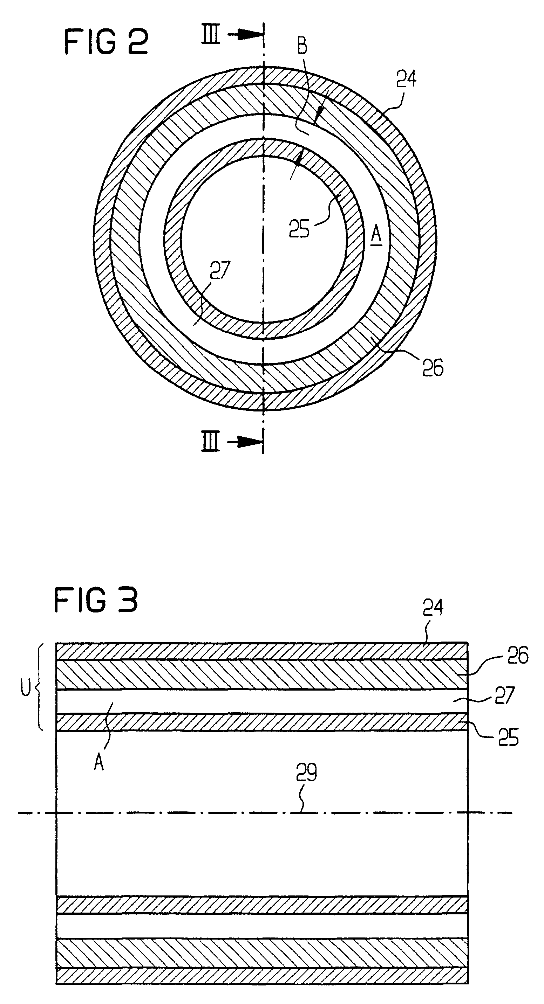

Die Figur 2 und 3 zeigen eine zweckmäßige Ausführungsform einer Elektrodenanordnung im Inneren des Reaktors 1. Dabei sind eine Elektrode 24 und eine Gegenelektrode 25 als koaxiale Hohlzylinder ausgebildet. Die Innenfläche der Elektrode 24 ist mit einer den Ringraum zwischen Elektrode 24 und Gegenelektrode 25 teilweise ausfüllenden hohlzylindrischen Schicht 26 aus einem dielektrisch wirksamen Material versehen. Das Anlegen der Entladungsspannung U an die Elektroden 24 und 25 bewirkt im zwischen der Innenfläche der dielektrischen Schicht 26 und der Außenfläche der Gegenelektrode 25 gebildeten Entladungsspalt 27 eine sogenannte dielektrisch behinderte Entladung. Dabei bilden sich nach Überschreiten einer Zündspannung am Entladungsspalt 27 lokal kleine, fadenförmige Entladungen (Filamente). Die Breite B des Entladungsspalts 27 beträgt im Ausführungsbeispiel nach FIG 1 etwa B = 2mm.

Da das für die Schicht 26 verwendete dielektrische Material zweckmäßigerweise eine Aluminiumoxid-Keramik mit schlechter elektrischer Leitfähigkeit ist, baut sich durch den Stromfluß im Entladungsspalt 27 lokal eine Gegenspannung zwischen der Innenwand der dielektrischen Schicht 26 und der Elektrode 24 auf. Dadurch werden nach kurzer Zeit an dieser Stelle die für die Aufrechterhaltung einer Gasentladung erforderliche Spannung unterschritten und weitere, für den Prozeß schädliche Einkopplung elektrischer Energie unterbunden.

Beim Betrieb des Reaktors 1 wird das Abgas A durch den Entladungsspalt 27 geleitet. Im Bereich jedes Filaments werden Moleküle des Abgases A durch Elektronenstöße ionisiert. Dabei entstehen insbesondere auch O- und OH-Radikale, die schwer adsorbierbares NO zu leicht adsorbierbarem NO₂ oxidieren.

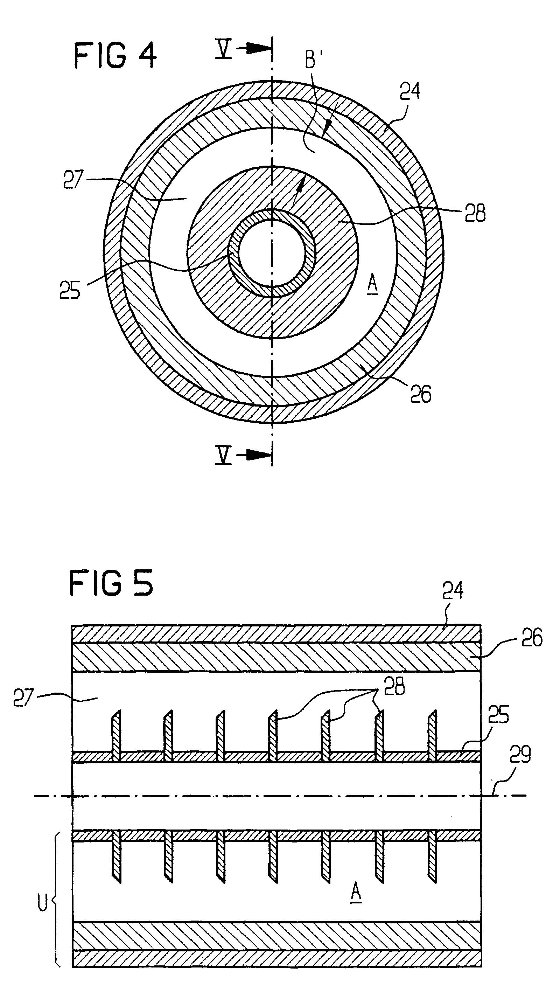

In FIG 4 und 5 ist eine bevorzugte Ausführungsform des Reaktors 1 dargestellt. Zusätzlich zu der anhand der Figuren 3 und 4 beschriebenen Ausführungsform des Reaktors 1 weist hier die Gegenelektrode 25 auf ihrer Außenfläche ringförmige Vorsprünge 28 auf. Diese ragen senkrecht zur Reaktorachse 29 und damit zur Strömungsrichtung des Abgases A in den Entladungsspalt 27 hinein. Da bei vorgegebener Entladungsspannung U die elektrische Feldstärke im Entladungsspalt 27 mit abnehmendem Abstand der Elektroden 24,25 zunimmt, bilden sich in der Umgebung der Vorsprünge 28 Bereiche mit vergleichsweise hoher Feldstärke aus. Gegenüber einem Reaktor 1 mit unstrukturierter Gegenelektrode 25 gemäß dem Ausführungsbeispiel nach den Figuren 2 und 3, kann hier die Breite B' des Entladungsspaltes 27 auf etwa B' = 8mm erhöht werden. Die Gasentladung und damit die Radikalerzeugung findet somit nur in der Umgebung der Vorsprünge 28 statt. Die zwischen zwei Vorsprüngen 28 liegenden Bereiche mit vergleichsweise geringer Feldstärke sind entladungsfrei und fördern dadurch den ungestörten Ablauf der Radikalreaktionen.

## Patentansprüche

1. Verfahren zur Abgasreinigung durch chemische Zersetzung von Schadstoffen eines Schadstoffgemisches, insbesondere zur Reduzierung des Stickoxidgehalts, im bei einem Verbrennungsprozeß erzeugten Abgas (A), mit folgenden Verfahrensschritten:
- Das zusammen mit dem Abgas (A) aus einem Verbrennungsraum (4) abströmende Schadstoffgemisch wird plasmachemisch vorbehandelt, wobei die plasmachemische Vorbehandlung lediglich bei Temperaturen unterhalb von ca. 250°C erfolgt,
- die Schadstoffe einer Schadstoffgruppe des vorbehandelten Schadstoffgemisches werden selektiv adsorbiert, und
- die selektiv adsorbierten Schadstoffe werden desorbiert und zur chemischen Zersetzung in den Verbrennungsraum (4) zurückgeleitet.

2. Verfahren nach Anspruch 1, **dadurch gekennzeichnet, daß** bei der plasma-chemischen Vorbehandlung Schadstoffe des Schadstoffgemisches oxidiert werden, wobei das Plasma mittels elektrischer Gasentladung erzeugt wird.

3. Verfahren nach Anspruch 1 oder 2, **dadurch gekennzeichnet, daß** der Stoffumsatz der plasmachemischen Vorbehandlung in Abhängigkeit von der Abgastemperatur und/oder von mindestens einem die Verbrennung bestimmenden Parameter geregelt wird.

4. Verfahren nach einem der Ansprüche 1 bis 3, **dadurch gekennzeichnet, daß** Schadstoffe des vorbehandelten Schadstoffgemisches in einem ersten Adsorber. (9) selektiv adsorbiert werden, während in einem parallelgeschalteten zweiten Adsorber (10) adsorbierte Schadstoffe desorbiert und an den Verbrennungsraum (4) zurückgeführt werden.

5. Verfahren nach Anspruch 4, **dadurch gekennzeichnet, daß** bei Erreichen eines Sättigungswertes vom ersten Adsorber (9) auf den zweiten Adsorber (10) umgeschaltet wird, und daß danach die Schadstoffrückführung vom ersten Adsorber (9) erfolgt.

6. Verfahren nach einem der Ansprüche 2 bis 5, **dadurch gekennzeichnet, daß** die Gasentladung mittels einer zeitlich periodischen Entladungsspannung (U) im Frequenzbereich von 1 kHz bis 100 kHz ausgelöst wird, deren Amplitude zwischen 5 kV und 20 kV beträgt.

7. Verfahren nach Anspruch 6, **dadurch gekennzeichnet, daß** der Stoffumsatz der plasmachemischen Vorbehandlung anhand der Frequenz und/oder der Amplitude der Entladungsspannung (U) eingestellt wird.

8. Verfahren nach einem der Ansprüche 1 bis 7, **dadurch gekennzeichnet, daß** das Abgas (A) während der plasmachemischen Vorbehandlung alternierend Entladungsbereiche mit hoher elektrischer Feldstärke einerseits und entladungsfreie Bereiche mit geringer elektrischer Feldstärke andererseits durchströmt.

9. Vorrichtung zur Abgasreinigung durch chemische Zersetzung von Schadstoffen eines Schadstoffgemisches, insbesondere zur Reduzierung des Stickoxidgehalts, im bei einem Verbrennungsprozeß erzeugten Abgas (A),
- mit einem Reaktor (1) zur plasmachemischen Vorbehandlung des zusammen mit dem Abgas (A) aus einem Verbrennungsraum (4) abströmenden Schadstoffgemisches,
- mit einem für eine Schadstoffgruppe selektiven Adsorber (9,10) zur Adsorbtion der plasmachemisch vorbehandelten Schadstoffe,
- mit Mitteln (17,18) zur Desorption der adsorbierten Schadstoffe, und
- mit einer Rückführung (16) der desorbierten Schadstoffe an den Verbrennungsraum (4).

10. Vorrichtung nach Anspruch 9, **gekennzeichnet durch** eine den Reaktor (1) mit dem Adsorber (9,10) verbindende Abgasleitung (5,7,8), die mit einer Wärmeisolierung (11) versehen ist.

11. Vorrichtung nach Anspruch 10, **dadurch gekennzeichnet, daß** der Reaktor (1) eine mit einer dielektrisch wirksamen Schicht (26) versehene Elektrode (24) und eine Gegenelektrode (25) aufweist, wobei zwischen deren einander zugewandten Flächen ein vom Abgas (A) durchströmter Entladungsspalt (27) gebildet ist.

12. Vorrichtung nach Anspruch 11, **dadurch gekennzeichnet, daß** die dielektrisch wirksame Schicht (26) aus einer Aluminiumoxid-Keramik besteht.

13. Vorrichtung nach einem der Ansprüche 11 oder 12, **dadurch gekennzeichnet, daß** die Elektrode (24) und die Gegenelektrode (25) als zueinander koaxiale Hohlzylinder ausgebildet sind, deren Achse als Reaktorachse (29) parallel zur Strömungsrichtung des Abgases (A) verläuft.

14. Vorrichtung nach Anspruch 11 bis 13, **dadurch gekennzeichnet, daß** von der Gegenelektrode (25) Vorsprünge (28) senkrecht zur Strömungsrichtung des Abgases (A) in den Entladungsspalt (27) hineinragen.

15. Vorrichtung nach einem der Ansprüche 11 bis 14, **dadurch gekennzeichnet, daß** die Breite (B') des Entladungsspalts (27) ≤ 8mm ist.

16. Vorrichtung nach einem der Ansprüche 11 bis 13, **dadurch gekennzeichnet, daß** die Breite (B) des Entladungsspalts (27) ≤ 2mm ist.

17. Vorrichtung nach einem der Ansprüche 9 bis 16, **gekennzeichnet durch** eine Regeleinheit (19) zur Einstellung der in den Reaktor (1) eingekoppelten Leistung.

18. Vorrichtung nach Anspruch 17, **dadurch gekennzeichnet, daß** die Regeleinheit (19) einem mit dem Reaktor (1) verbundenen Hochspannungsgenerator (22) anhand der Abgastemperatur und/oder mindestens einem die Verbrennung bestimmenden Parameter die Frequenz und/oder die Amplitude der Entladungsspannung (U) vorgibt.

19. Vorrichtung nach einem der Ansprüche 9 bis 18, **gekennzeichnet durch** mindestens zwei parallele geschaltete Adsorber (9,10), die abwechselnd dem Reaktor (1) zuschaltbar sind, wobei jeweils ein vom Reaktor (1) abgesperrter Adsorber (10) den Mitteln (17,18) zur Desorption und der Rückführung (16) zugeschaltet ist.

20. Vorrichtung nach einem der Ansprüche 9 bis 19, **dadurch gekennzeichnet, daß** zur Desorption der adsorbierten Schadstoffe ein Heißlufterzeuger (17,18) vorgesehen ist.

## Claims

1. A process for cleaning exhaust gas by chemical decomposition of pollutants pertaining to a pollutant mixture, in particular for reducing the nitrogen-oxide content, in the exhaust gas (A) which is generated in the course of a combustion process, involving the following process steps:
- the pollutant mixture flowing away together with the exhaust gas (A) out of a combustion chamber (4) is pretreated plasma-chemically, the plasma-chemical pretreatment taking place only at temperatures below approximately 250°C,
- the pollutants pertaining to a group of pollutants of the pretreated pollutant mixture are selectively adsorbed, and
- the selectively adsorbed pollutants are desorbed and recirculated into the combustion chamber (4) with a view to chemical decomposition.

2. Process according to Claim 1, **characterised in that** pollutants pertaining to the pollutant mixture are oxidised in the course of the plasma-chemical pretreatment, the plasma being generated by means of electrical gas discharge.

3. Process according to Claim 1 or 2, **characterised in that** the conversion of material of the plasma-chemical pretreatment is controlled as a function of the temperature of the exhaust gas and/or as a function of at least one parameter determining the combustion.

4. Process according to one of Claims 1 to 3, **characterised in that** pollutants pertaining to the pretreated pollutant mixture are selectively adsorbed in a first adsorber (9), whereas in a second adsorber (10), connected in parallel, adsorbed pollutants are desorbed and recirculated to the combustion chamber (4).

5. Process according to Claim 4, **characterised in that** when a saturation value is reached a change-over from the first adsorber (9) to the second adsorber (10) is undertaken and **in that** the recirculation of pollutants subsequently from the first adsorber (9) takes place.

6. Process according to one of Claims 2 to 5, **characterised in that** the gas discharge is triggered by means of a temporally periodic discharge voltage (U) within the frequency-range from 1 kHz to 100 kHz, the amplitude of which amounts to between 5 kV and 20 kV.

7. Process according to Claim 6, **characterised in that** the conversion of material of the plasma-chemical pretreatment is adjusted on the basis of the frequency and/or the amplitude of the discharge voltage (U).

8. Process according to one of Claims 1 to 7, **characterised in that** during the plasma-chemical pretreatment the exhaust gas (A) flows in alternating manner through discharge regions having a high electrical field strength, on the one hand, and discharge-free regions having a low electrical field strength, on the other hand.

9. A device for cleaning exhaust gas by chemical decomposition of pollutants pertaining to a pollutant mixture, in particular for reducing the nitrogen-oxide content, in the exhaust gas (A) which is generated in the course of a combustion process,
- with a reactor (1) for plasma-chemical pretreatment of the pollutant mixture flowing away together with the exhaust gas (A) out of a combustion chamber (4),
- with an adsorber (9, 10) that is selective in respect of a group of pollutants for the purpose of adsorbing the plasma-chemically pretreated pollutants,
- with means (17, 18) for desorbing the adsorbed pollutants, and
- with a recirculation (16) of the desorbed pollutants to the combustion chamber (4).

10. Device according to Claim 9, **characterised by** an exhaust-gas line (5, 7, 8) connecting the reactor (1) to the adsorber (9, 10), which is provided with a thermal insulation (11).

11. Device according to Claim 10, **characterised in that** the reactor (1) comprises an electrode (24) provided with a dielectrically active layer (26) and comprises a counter-electrode (25), whereby a discharge gap (27) through which the exhaust gas (A) flows is formed between the surfaces of said electrodes facing one another.

12. Device according to Claim 11, **characterised in that** the dielectrically active layer (26) consists of an aluminium-oxide ceramic.

13. Device according to one of Claims 11 or 12, **characterised in that** the electrode (24) and the counter-electrode (25) take the form of hollow cylinders which are coaxial with one another, the axis of which extends as reactor axis (29) parallel to the direction of flow of the exhaust gas (A).

14. Device according to one of Claims 11 to 13, **characterised in that** projections (28) protrude from the counter-electrode (25) into the discharge gap (27) perpendicular to the direction of flow of the exhaust gas (A).

15. Device according to one of Claims 11 to 14, **characterised in that** the width (B') of the discharge gap (27) is ≤ 8 mm.

16. Device according to one of Claims 11 to 13, **characterised in that** the width (B) of the discharge gap (27) is ≤ 2 mm.

17. Device according to one of Claims 9 to 16, **characterised by** a control unit (19) for adjusting the power that is fed into the reactor (1).

18. Device according to Claim 17, **characterised in that** on the basis of the exhaust-gas temperature and/or at least one parameter determining the combustion the control unit (19) presets the frequency and/or the amplitude of the discharge voltage (U) for a high-voltage generator (22) connected to the reactor (1).

19. Device according to one of Claims 9 to 18, **characterised by** at least two adsorbers (9, 10) connected in parallel which can be connected alternately to the reactor (1), whereby an.adsorber (10) that is shut off from the reactor (1) is respectively connected to the means (17, 18) for desorption and to the recirculation line (16).

20. Device according to one of Claims 9 to 19, **characterised in that** a hot-air generator (17, 18) is provided for the purpose of desorbing the adsorbed pollutants.

## Revendications

1. Procédé d'épuration de gaz d'échappement par décomposition chimique de substances polluantes d'un mélange de substances polluantes, notamment en vue de réduire la teneur en oxydes d'azote de gaz d'échappement (A) produits dans un processus de combustion, comprenant les stades suivants de procédé :
- le mélange de substances polluantes sortant ensemble avec les gaz d'échappement (A) d'une chambre de combustion est prétraité chimiquement au plasma, le prétraitement chimique au plasma s'effectuant seulement à des températures inférieures à 250°C environ,
- les substances polluantes d'un groupe de substances polluantes du mélange de substances polluantes prétraité sont adsorbées sélectivement et
- les substances polluantes adsorbées sélectivement sont désorbées et sont retournées à la chambre (4) de combustion en vue d'être décomposées chimiquement.

2. Procédé suivant la revendication 1, **caractérisé en ce que**, pendant le prétraitement chimique au plasma, des substances polluantes du mélange de substances polluantes sont oxydées, le plasma étant produit au moyen d'une décharge électrique dans les gaz.

3. Procédé suivant la revendication 1 ou 2, **caractérisé en ce que** la conversion de matière du prétraitement chimique au plasma est réglée en fonction de la température des gaz d'échappement et/ou d'au moins un paramètre déterminant la combustion.

4. Procédé suivant l'une des revendications 1 à 3, **caractérisé en ce que** des substances polluantes du mélange de substances polluantes prétraité sont adsorbées sélectivement dans un premier adsorbeur (9), tandis que des substances polluantes adsorbées dans un deuxième adsorbeur (10) monté en parallèle sont désorbées et retournées à la chambre (4) de combustion.

5. Procédé suivant la revendication 4, **caractérisé en ce que** lorsqu'une valeur de saturation du premier adsorbeur (9) est atteinte on passe au deuxième adsorbeur (10) et **en ce que**, ensuite, le retour des substances polluantes s'effectue à partir du premier adsorbeur (9).

6. Procédé suivant l'une des revendications 2 à 5, **caractérisé en ce que** la décharge dans les gaz est déclenchée au moyen d'une tension (U) de décharge périodique dans le temps dans l'intervalle de fréquences de 1 kHz à 100 kHz, dont l'amplitude est comprise entre 5 kV et 20 kV.

7. Procédé suivant la revendication 6, **caractérisé en ce que** la conversion de matière du prétraitement chimique au plasma est réglée au moyen de la fréquence et/ou de l'amplitude de la tension (U) de décharge.

8. Procédé suivant l'une des revendications 1 à 7, **caractérisé en ce que** les gaz d'échappement (A) passent pendant le prétraitement chimique au plasma en alternance dans des zones de décharge ayant une grande intensité du champ électrique d'une part, et dans des zones sans décharge ayant une petite intensité du champ électrique.

9. Dispositif d'épuration de gaz d'échappement par décomposition thermique de substances polluantes d'un mélange de substances polluantes, notamment en vue de réduire la teneur en oxydes d'azote des gaz d'échappement (A) produits dans un processus de combustion,
- comprenant un réacteur (1) de prétraitement chimique au plasma du mélange de substances polluantes sortant ensemble avec les gaz d'échappement (A) d'une chambre (4) de combustion,
- comprenant un adsorbeur (9, 10) sélectif pour un groupe de substances polluantes destiné à l'adsorption des substances polluantes prétraitées chimiquement au plasma,
- comprenant des moyens (17, 18) de désorption des substances polluantes adsorbées et
- comprenant un retour (16) des substances polluantes désorbées à la chambre (4) de combustion.

10. Dispositif suivant la revendication 9, **caractérisé par** un conduit (5, 7, 8) pour les gaz d'échappement mettant le réacteur à (1) en communication avec l'adsorbeur (9, 10) et muni d'un calorifugeage.

11. Dispositif suivant la revendication 10, **caractérisé en ce que** le réacteur comporte une électrode (24) munie d'une couche (26) efficace du point de vue diélectrique et une contre-électrode (25), un intervalle (27) de décharge, dans lequel passent les gaz d'échappement (A) étant formé entre leurs surfaces tournées l'une vers l'autre.

12. Dispositif suivant la revendication 11, **caractérisé en ce que** la couche (26) efficace du point de vue diélectrique est en une céramique à l'oxyde d'aluminium.

13. Dispositif suivant l'une des revendications 11 ou 12, **caractérisé en ce que** l'électrode (24) et la contre-électrode (25) sont constituées sous la forme de cylindres creux coaxiaux dont les axes s'étendent parallèlement à l'axe (29) du réacteur dans la direction d'écoulement des gaz d'échappement (A).

14. Dispositif suivant la revendication 11 à 13, **caractérisé en ce que** des saillies (28) de la contre-électrode (25) pénètrent perpendiculairement à la direction d'écoulement des gaz d'échappement (A) dans l'intervalle (27) de décharge.

15. Dispositif suivant l'une des revendications 11 à 14, **caractérisé en ce que** la largeur (B') de la fente (27) de décharge est ≤ 8 mm.

16. Dispositif suivant l'une des revendications 11 à 13, **caractérisé en ce que** la largeur (B) de l'intervalle (27) de décharge est ≤ 2 mm.

17. Dispositif suivant l'une des revendications 9 à 16, **caractérisé par** une unité (19) de régulation destinée à régler la puissance injectée dans le réacteur (1).

18. Dispositif suivant la revendication 17, **caractérisé en ce que** l'unité (19) de régulation prescrit un générateur (22) de haute tension relié au réacteur (1) au moyen de la température des gaz d'échappement et/ou d'au moins un paramètre déterminant la combustion, la fréquence et/ou l'amplitude de la tension (U) de décharge.

19. Dispositif suivant l'une des revendications 9 à 18, **caractérisé par** au moins deux absorbeurs (9, 10) montés en parallèle qui peuvent être branchés alternativement sur le réacteur (1), l'un des adsorbeurs (10) séparé du réacteur (1) étant branché sur des moyens (17, 18) de désorption et de retour (16).

20. Dispositif suivant l'une des revendications 9 à 19, **caractérisé en ce qu'**il prévu pour la désorption des substances polluantes adsorbées un générateur (17, 18) d'air chaud.
